# EUROPEAN PATENT APPLICATION

(11) **EP 2 865 586 A1**
(43) Date of publication of application: **29.04.2015**
(21) Application number: 14190609.9
(22) Date of filing: 28.10.2014
(51) Int. Cl.: B62J 1/08, B62K 19/36

(54) **Adjustable seat tube assembly for bicycle**

(30) Priority: 28.10.2013 CN 201320667836 U
(71) Applicant: J.D Components Co., Ltd., Shou Shui Hsiang, Chang Hua Hsien (TW)
(72) Inventor: Yang, Yao-Ming, Chang Hua Hsien (TW); Huang, Chun-Wei, 522 Changhua County (TW); Chen, Hsin-Hung, Chang Hua Hsien (TW)
(74) Representative: Straus, Alexander

(57) **Abstract**

An adjustable seat-tube assembly (10, 12) for a bicycle includes a seat tube (20) and a seatpost (30) telescoped inside the seat tube (20). For adjusting the seatpost (30) in altitude, a motor (45, 47) is wirelessly activated to drive a control lever (43) to push a valve stem (42) to perform linear displacement, thereby connecting or disconnecting an oil path inside a valve seat (41), and in turn making the seatpost (30) to extend from or retract into the seat tube (20) and changing the altitude of the saddle.

## Description

### BACKGROUND OF THE INVENTION

### 1. Technical Field

The present invention relates to bicycles, and more particularly to an adjustable seat-tube assembly for a bicycle.

### 2. Description of Related Art

The proper position of a bicycle saddle is prerequisite to a cyclist's comfortable riding experience. For properly positioning bicycle saddles, various adjusting mechanisms have been proposed and applied to bicycle seat tubes, (such as those for altitude adjustment, horizontal adjustment, or angle adjustment) for cyclists to operate and meet their individual needs.

As to the prior art about altitude adjustment for saddles, one example is Taiwan Patent Application Publication No. 201417209, wherein steel wires, oil pipes or circuits are used to control displacement of a valve stem, so as to connect or disconnect the oil path inside a piston seat and thereby control a seatpost to move vertically with respect to a seat tube. However, in the prior patent, steel wires, oil pipes or circuits have to be installed in the confined space in a bicycle frame, so the manufacturing is difficult and other components may be prevented from proper installation. Hence, the prior patent is not a really practical approach and need to be improved.

### SUMMARY OF THE INVENTION

The primary objective of the present invention is to provide an adjustable seat-tube assembly for a bicycle, wherein wireless transmission instead of a wiring arrangement is used for achieving altitude adjustment of a seatpost, thus being more practical and convenient as compared to the prior art.

For achieving the foregoing objective, according to the present invention, the seat-tube assembly comprises a seat tube, a seatpost, a control valve set, a wireless transmitting device, and a wireless receiving device. The seatpost is telescoped in the seat tube in an axially movable manner. The control valve set has a valve seat, a valve stem, a control lever, and a motor. The valve stem has one end deposited in the valve seat. The control lever abuts against an opposite end of the valve stem. The motor has a driving shaft. The driving shaft abuts against the control lever. Therein, the valve seat is deposited on one of the seat tube and the seatpost, while the valve stem is deposited on the other of the seat tube and the seatpost. The wireless transmitting device has an activating switch and a wireless transmitter connected to the activating switch. The wireless receiving device has a circuit board and a receiver. The circuit board is electrically connected to the motor, for controlling the motor's motion. The receiver is deposited in the circuit board and electrically connected to the transmitter, for receiving a wireless signal sent by the transmitter.

Thereby, a cyclist can use the wireless transmission between the wireless transmitting device and the wireless receiving device to activate the motor, so that the driving shaft of the motor drives the control lever to displace the valve stem linearly, so as to connect or disconnect an oil path in the valve seat. As a result, the seatpost can extend from or retract into the seat tube, thereby changing the altitude of the saddle. Once the seatpost is positioned at an outmost position, it is impossible for an unauthorized person to ride the bicycle, thus guarding against pilferage.

### BRIEF DESCRIPTION OF THE DRAWINGS

FIG. 1 is a perspective view of a first embodiment of the present invention.
FIG. 2 is a partial, cross-sectional view of the first embodiment of the present invention.
FIG. 3 is a perspective view of the wireless transmitting device of the first embodiment of the present invention.
FIG. 4, similar to FIG. 2, shows the seatpost extending from or retracing into the seat tube.
FIG. 5 is a perspective view of a second embodiment of the present invention.
FIG. 6 is a partial, cross-sectional view of the second embodiment of the present invention.
FIG. 7, similar to FIG. 6, shows the seatpost extending from or retracing into the seat tube.

### DETAILED DESCRIPTION OF THE INVENTION

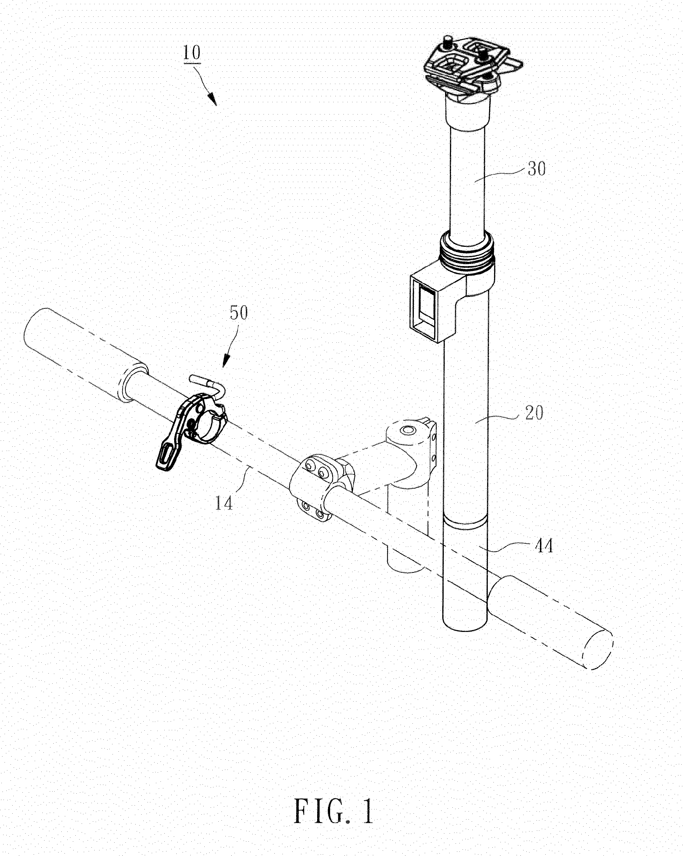

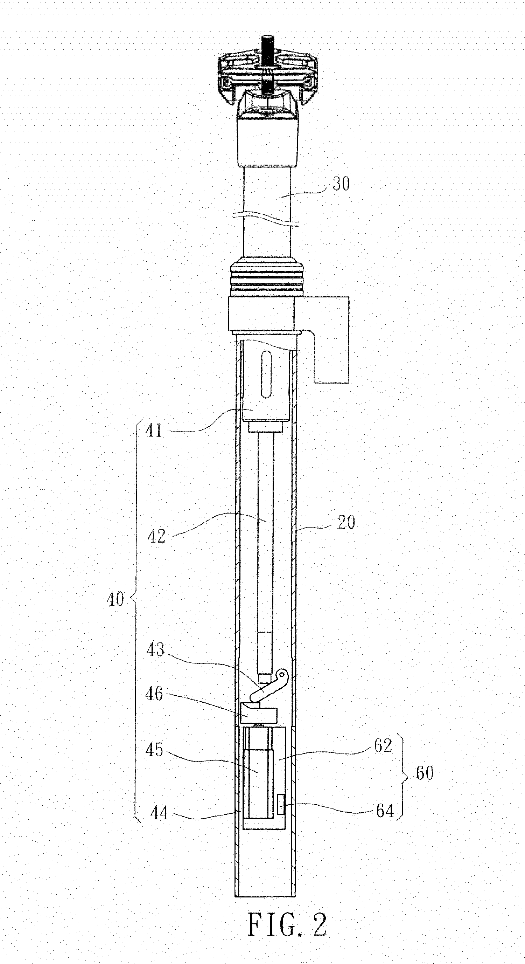

Referring to FIG. 1 and FIG. 2, in a first embodiment of the present invention, an adjustable seat-tube assembly 10 comprises a seat tube 20, a seatpost 30, a control valve set 40, a wireless transmitting device 50, and a wireless receiving device 60.

The seatpost 30 has an upper end allowing a saddle (not shown) to be mounted thereon, and has a lower end inserted into the seat tube 20 from an upper end of the seat tube 20, thereby being telescoped in the seat tube 20 in an axially movable manner.

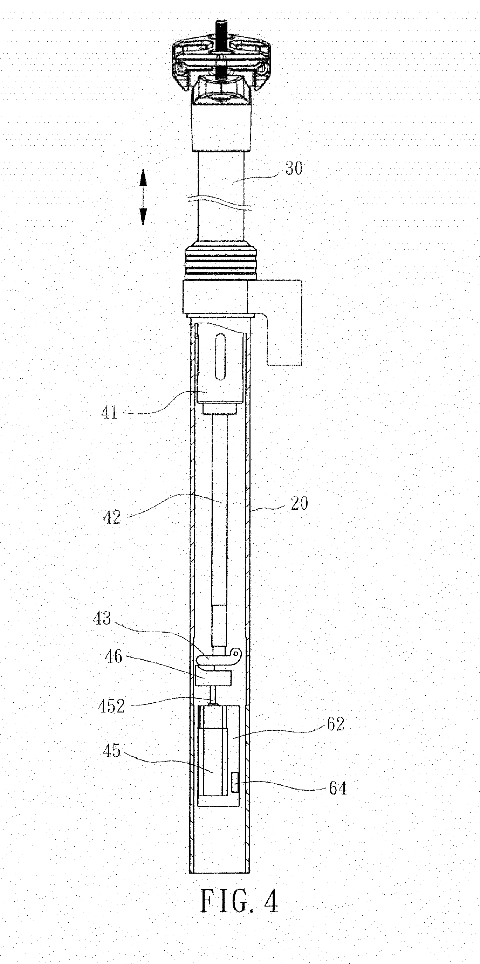

The control valve set 40 has a valve seat 41, a valve stem 42, a control lever 43, a motor housing 44, and a motor 45. The valve seat 41 is fixed in the seatpost 30. The valve stem 42 is deposited in the seat tube 20 and has its upper end inserted into the valve seat 41, for connecting or disconnecting an oil path in the valve seat 41. The control lever 43 has its one end pivotally connected to the lower end of the seat tube 20 and abutting against the lower end of the valve stem 42. The motor 45 (herein being a linear motor) is installed in the motor housing 44. The motor housing 44 is connected to the lower end of the seat tube 20. In addition, the motor 45 has a driving shaft 452. As shown in FIG. 4, a cam bit 46 is mounted around the driving shaft 452 and abutting against the control lever 43.

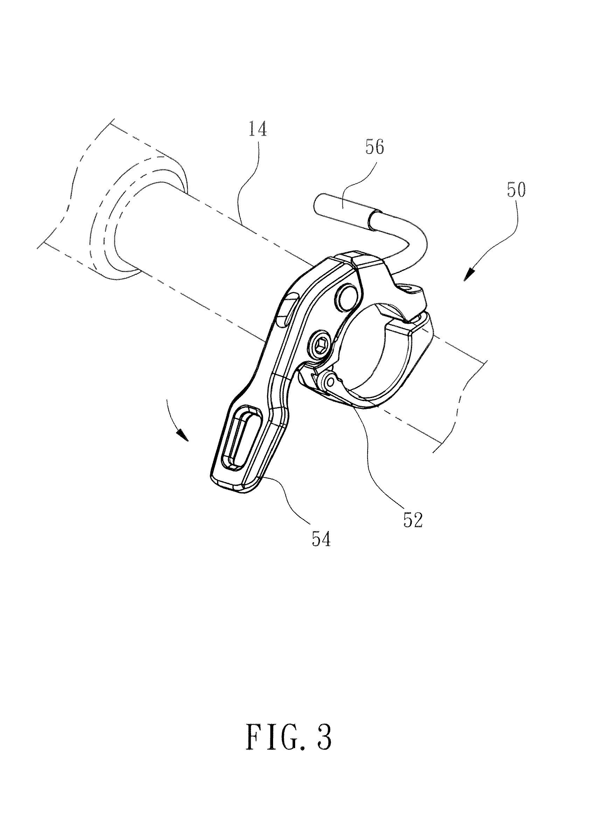

As shown in FIG. 3, the wireless transmitting device 50 has a clip ring 52, an activating switch 54, and a transmitter 56. The clip ring 52 is detachably mounted on the bicycle frame, preferably at the handlebar 14. The activating switch 54 is pivotally connected to the clip ring 52. The transmitter 56 is connected to the activating switch 54, for being controlled by the activating switch 54 to send a wireless signal.

Referring back to FIG. 2, the wireless receiving device 60 is installed in the motor housing 44 and has a circuit board 62 and a receiver 64. The circuit board 62 is electrically connected to the motor 45, for controlling the motor 45 to operate. The receiver 64 is deposited on the circuit board 62 and is electrically connected to the transmitter 56 in a wireless manner, for receiving the wireless signal sent by the transmitter 56.

For adjusting the altitude of the saddle, as shown in FIG. 3, the activating switch 54 is first pressed to control the transmitter 56 to send a wireless signal to the receiver 64. Then the circuit board 62 controls the activation of the motor 45 according to the wireless signal received by the receiver 64. When the motor 45 is activated, the driving shaft 452 of the motor 45 extends and indirectly pushes the control lever 43 upward through the cam bit 46, as shown in FIG. 4. As a result, the control lever 43 swings to push the valve stem 42 upward, thereby making the oil path in the valve seat 41 connected. At this time, the cyclist can make the seatpost 30 to perform linear displacement with respect to the seat tube 20 according to his/her own needs, thereby further adjusting the altitude of the saddle.

When the saddle is positioned at a desired altitude, the cyclist can simply release the activating switch 54. As a result, the driving shaft 452 of the motor 45 stops pushing the control lever 43, and at this time a resilience-based returning member (not shown) provided in the valve seat 41 pushes the valve stem 42 downward to disconnect the oil path in the valve seat 41, thereby making the seatpost 30 positioned.

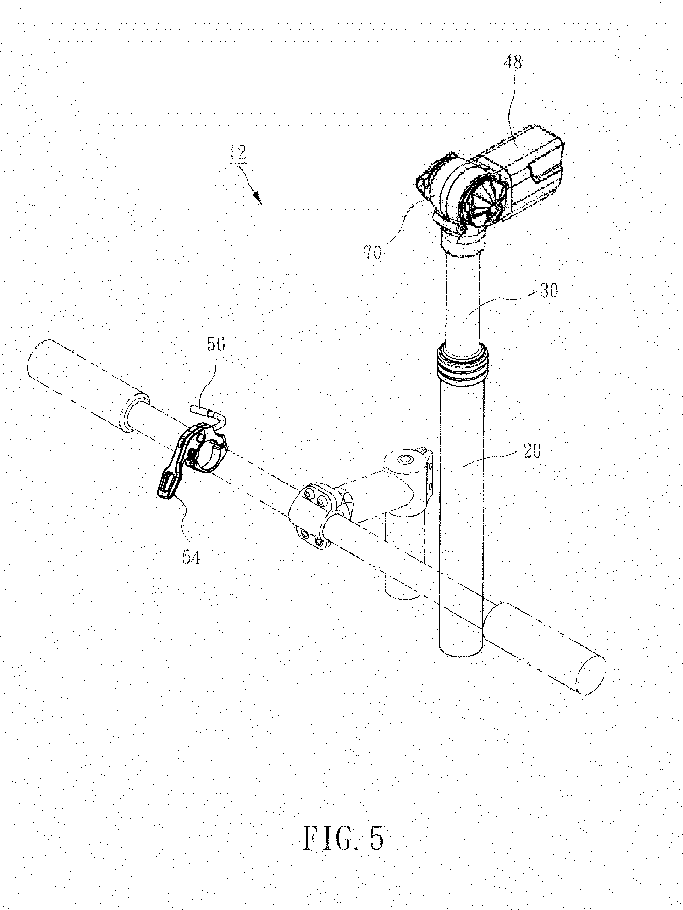

The above-described structure may be modified. FIG. 5 provides a second embodiment of the present invention, an adjustable seat-tube assembly 12 here is structurally similar to that of the first embodiment, except that the control valve set 40 is installed differently.

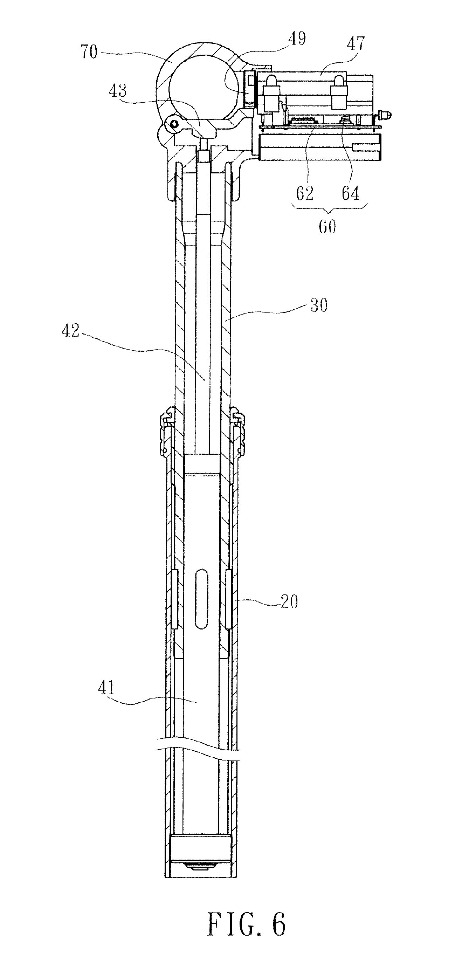

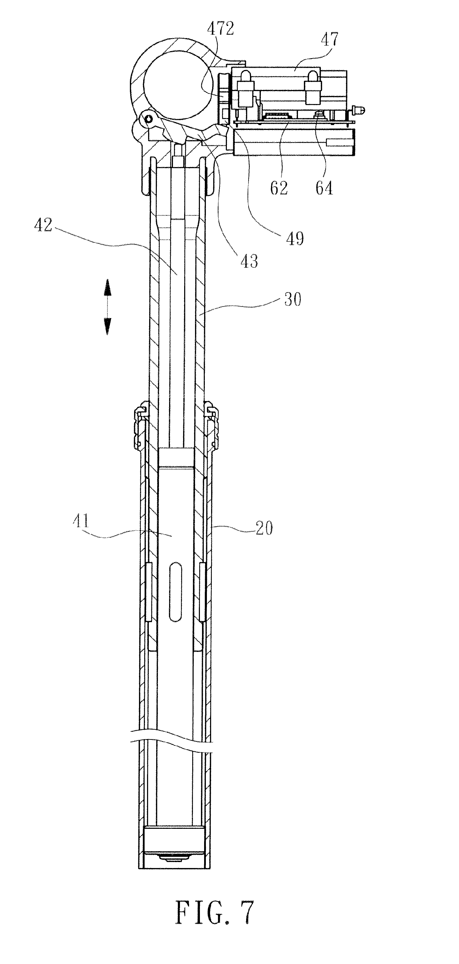

Particularly, as to the control valve set 40, as shown in FIG. 6, the valve seat 41 is fixed in the seat tube 20, and the valve stem 42 is deposited in the seatpost 30 with its lower end inserted into the valve seat 41. The control lever 43 has its one end pivotally connected to a saddle holder 70 and abutting against the upper end of the valve stem 42. The saddle holder 70 is connected to the upper end of the seatpost 30. In the present embodiment, the motor 47 of the control valve set 40 is a servo motor. The motor 47 and the wireless receiving device 60 are both installed inside a motor housing 48. The motor housing 48 is connected to a lateral of the saddle holder 70. Also, the motor 47 has a driving shaft 472. As shown in FIG. 7, a cam bit 49 is mounted around the driving shaft 472 and abutting against the control lever 43.

For adjusting the altitude of the saddle, the activating switch 54 is first pressed so that the circuit board 62 controls the activation of the motor 47 according to the wireless communication between the transmitter 56 and the receiver 64. When the motor 47 is activated, the driving shaft 472 of the motor 47 drives the cam bit 49 to rotate for a predetermined angle, so that the cam bit 49 pushes the control lever 43 downward, as shown in FIG. 7. As a result, the control lever 43 swings downward to push the valve stem 42, thereby making the oil path in the valve seat 41 connected. At this time, the cyclist can make the seatpost 30 to perform linear displacement with respect to the seat tube 20 according to his/her own needs, thereby further adjusting the altitude of the saddle.

When the saddle is positioned at a desired altitude, the cyclist can simply release the activating switch 54. As a result, the driving shaft 472 of the motor 47 stops making the cam bit 49 push the control lever 43, and at this time a resilience-based returning member provided in the valve seat 41 pushes the valve stem 42 upward to disconnect the oil path in the valve seat 41, thereby making the seatpost 30 positioned.

To sum up, the disclosed adjustable seat-tube assembly 10, 12 uses wireless transmission for achieving the altitude adjustment of the seatpost 30. This effectively eliminates the trouble of wiring and this is more practical and convenient as compared to the prior art. Besides, the disclosed adjustable seat-tube assembly 10, 12 may also use the wireless transmitting device 50 as an anti-thief device. When a cyclist arrives at a destination, he/she can operates as above to position the saddle at a possible upmost position and remove the clip ring 52 from the handlebar 14. Once the cyclist brings the wireless transmitting device 50 away with him/her, it is impossible for an unauthorized person to ride the bicycle because the saddle is too high for the person to pedal, thus guarding against pilferage.

## Claims

1. An adjustable seat-tube assembly (10, 12) for a bicycle, comprising:
a seat tube (20);
a seatpost (30), telescoped in the seat tube (20) in an axially movable manner;
a control valve set (40), having a valve seat (41), a valve stem (42), and a motor (45, 47), the valve stem (42) having one end received in the valve seat (41) in an axially movable manner, and the motor (45, 47) having a driving shaft (452, 472) that abuts against the valve stem (42), wherein the valve seat (41) is deposited on one of the seat tube (20) and the seatpost (30), while the valve stem (42) is deposited on the other of the seat tube (20) and the seatpost (30);
a wireless transmitting device (50), having an activating switch (54) and a transmitter (56) connected to the activating switch (54); and
a wireless receiving device (60), having a circuit board (62) and a receiver (64), wherein the circuit board (62) is electrically connected to the motor (45, 47), and the receiver (64) is deposited on the circuit board (62) and electrically connected to the transmitter (56);
whereby, the transmitter (56) is controlled by the activating switch (54) to send a wireless signal to the receiver (64), and the circuit board (62) then activates the motor (45, 47) according to the wireless signal received by the receiver (64), to extending the seatpost (30) to an outmost position.

2. The adjustable seat-tube assembly of claim 1, wherein the valve seat (41) is deposited inside the seatpost (30), and the valve stem (42) is deposited inside the seat tube (20).

3. The adjustable seat-tube assembly of claim 2, wherein the seat tube (20) has a lower end connected to a motor housing (44) that contains the motor (45) and the wireless receiving device (60).

4. The adjustable seat-tube assembly of claim 2, wherein the control valve set (40) further has a control lever (43) that has one end pivotally connected to a lower end of the seat tube (20) and abutting against the valve stem (42) and the driving shaft (452) of the motor (45).

5. The adjustable seat-tube assembly of claim 4, wherein the motor (45) is a linear motor, and a cam bit (46) is mounted around the driving shaft (452) of the motor (45) to abut against the control lever (43).

6. The adjustable seat-tube assembly of claim 1, wherein the valve seat (41) is deposited in the seat tube (20), and the valve stem (42) is deposited in the seatpost (30).

7. The adjustable seat-tube assembly of claim 6, wherein the control valve set (40) further has a control lever (43), and the seatpost (30) has an upper end connected to a saddle holder (70), in which the control lever (43) has one end pivotally connected in the saddle holder (70) and abutting against the valve stem (42) and the driving shaft (472) of the motor (47).

8. The adjustable seat-tube assembly of claim 7, wherein the saddle holder (70) has a lateral connected to a motor housing (48) that contains the motor (47) and the wireless receiving device (60).

9. The adjustable seat-tube assembly of claim 7, wherein the motor (47) is a servo motor, and a cam bit (49) is mounted around the driving shaft (472) of the motor (47) and abutting against the control lever (43).

10. The adjustable seat-tube assembly of claim 1, wherein the wireless transmitting device (50) further has a clip ring (52) for the activating switch (54) to be pivotally connected thereto.
